# EUROPEAN PATENT APPLICATION

(11) **EP 2 314 478 A1**
(43) Date of publication of application: **27.04.2011**
(21) Application number: 09013203.6
(22) Date of filing: 20.10.2009
(51) Int. Cl.: B60R 1/00

(54) **Monitor-displayed device for car rear vision**

(71) Applicant: Shih, Wen-Ching, 110 Taipei City (TW); Yu, A-Wen, Taipei City 110 (TW); Chen, Wen-Chiang, Hsin-chu 300 (TW)
(72) Inventor: Shih, Wen-Ching, 110 Taipei City (TW); Yu, A-Wen, Taipei City 110 (TW); Chen, Wen-Chiang, Hsin-chu 300 (TW)
(74) Representative: Winkler, Andreas Fritz Ernst

(57) **Abstract**

The present invention provides a monitor-displayed device for car rear vision. It is to install monitors (10',20',30') on a dashboard in the car or the car frame (300) on two sides of the front windscreen (200). The traditional two rear vision mirrors of the car are replaced by the monitors (10',20',30'). Image data taken by an image receiver (40) can be displayed synchronously. Rear side image data can be provided to the driver with a broader viewing angle.

## Description

### FIELD OF THE INVENTION

The present invention relates to a monitor-displayed device for car rear vision. More specifically, the present invention relates to monitors on a dashboard in the car or a car frame on two sides of the front windscreen. The invention is used to replace rear vision mirrors of a traditional car to provide the driver image data observed from two sides of the car with fewer blind spots.

### BACKGROUND OF THE INVENTION

Generally, a traditional car has a pair of rear vision mirrors on its two sides, respectively. The driver can see image data from two sides and back of the car via the left and right rear vision mirrors. However, the exposed rear vision mirrors not only collide and graze other cars or objects easily, but also have blind spots. Therefore, the driver is not aware of approaching cars from both sides often so that dangerous situations, such as collisions may occur. Therefore, there is room for improvement.

Hence, the inventor creates a new monitor-displayed device for car rear vision with his abundant experiences in the field, elaborate study and continuing improvement. It can improve the defects of current products and increase efficiency.

### SUMMARY OF THE INVENTION

Therefore, the main object of the present invention is to provide a monitor-displayed device for car rear vision. Rear vision mirrors on two sides of the car are replaced with a monitor-displayed device for displaying images in the car. Three monitors can be installed on the dashboard. Otherwise, one monitor can be installed on the dashboard and another two can be installed on the car frame on two sides of the front windscreen, respectively. Hence, image data from the left side, right side and the back can be observed by the three monitors on different locations. Drivers will have no blind spots when driving.

In order to let the examiner have further understanding of the present invention, detailed description with schematic views is set out below.

### BRIEF DESCRIPTION OF THE DRAWING

- Fig. 1: is a schematic view of a dashboard of a car in a first embodiment of the present invention.
- Fig. 2: is a schematic view of partial structure of a car in a second embodiment of the present invention.
- Fig. 3: is a schematic view of an image receiver of a car in the embodiment of the present invention.

### DETAILED DESCRIPTION OF THE PREFERRED EMBODIMENTS

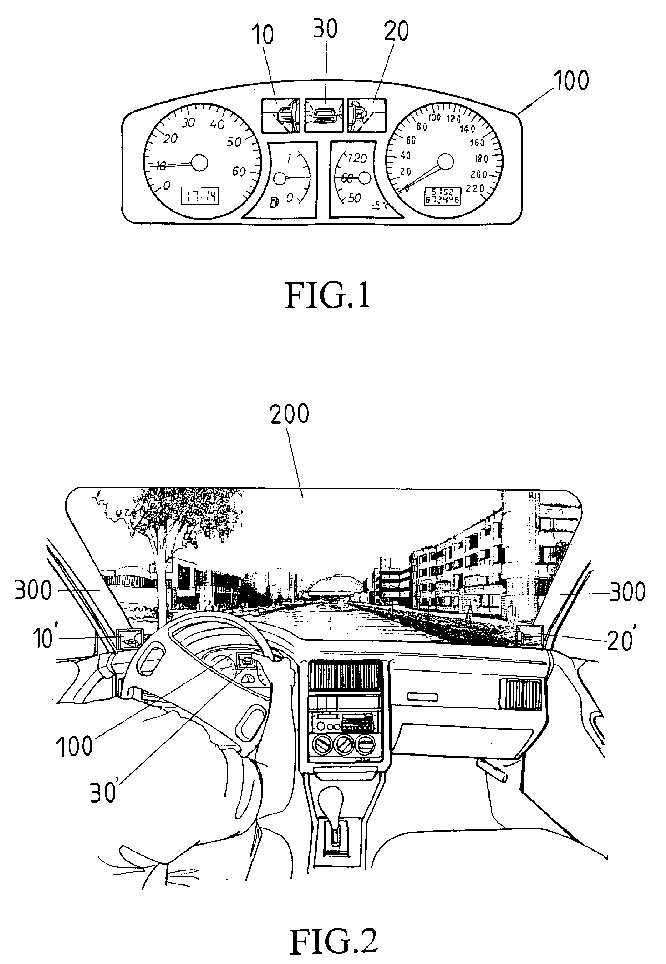

Please refer to Fig. 1 and Fig. 2. A preferable embodiment of a monitor-displayed device for car rear vision in the present invention is suitable for assembling in a vehicle. The vehicle here is a car. The device can be used on a motorcycle, an electric vehicle or other cars driven by other power in practice.

A main characteristic of the present invention is to replace traditional left and right rear vision mirrors of a car with monitors in the car. As the embodiment shown in Fig. 1, three monitors are installed on a dashboard 100 of a general car. Monitors 10 and 20 on the left and right sides are just like the left and right rear vision mirrors of a car. A middle monitor 30 displays images from the back of the car.

Another embodiment shown in Fig. 2 is to install monitors 10' and 20'on a car frame 300 on two sides of a front windscreen 200 in the car, respectively. They replace the traditional left and right rear vision mirrors. Another monitor 30' is installed on the dashboard 100 of the car. The monitor 30' can provide image data from the back of the car.

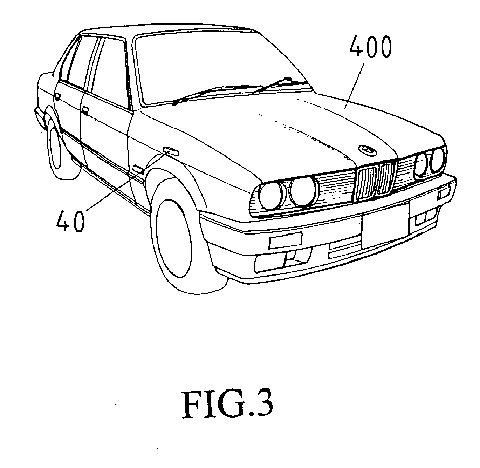

The monitors 10, 10'; 20, 20'; 30 and 30' disclosed above have to link to specified image receivers, respectively. Please refer to Fig. 3. An image receiver 40 is a video camera, installed in a proper location under the left and right sides of the hood 400. The monitors installed in the car can receive and display the image data taken and output by the image receiver 40 synchronously. It can let the driver watch the rear side image and have fewer blind spots.

To conclude, the monitor-displayed device for car rear vision of the present invention is a measure that is not limited to the requirement that a traditional car has to install rear vision mirrors. Traditional rear vision mirrors are replaced by the monitors (or screens) in the car. In addition to the convenience for the driver to watch image data from the left-hand, right-hand and back sides, it can be free from collision of the exposed rear vision mirrors with other cars or objects. It is no doubt that the effects are practical. Furthermore, the present invention has not been disclosed or seen in other publications. It conforms to the regulations in the patent law and a patent will be applied for in conformity with the law.

## Claims

1. A monitor-displayed device for car rear vision having at least one monitor on a dashboard in the car and image receivers installed in a proper location under two sides of the hood, wherein image data taken and output by the image receivers can be received and displayed by the monitors synchronously to the driver.

2. According to the monitor-displayed device for car rear vision according to claim 1, wherein two monitors are installed on the car frame on two sides of the front windscreen in the car, respectively, and image data from two sides of the car taken by the monitor image receiver can be received by the monitors synchronously.

3. According to the monitor-displayed device for car rear vision according to claim 1, wherein an image receiver is installed in a proper place in the back of the car.
